(19) Europäisches Patentamt
European Patent Office
Office européen des brevets

(11) EP 0 442 804 B1

(12) # FASCICULE DE BREVET EUROPEEN

(45) Date de publication et mention de la délivrance du brevet: **28.08.1996 Bulletin 1996/35**

(51) Int Cl.6: **C08F 297/02**, C08F 299/00

(21) Numéro de dépôt: **91400349.6**

(22) Date de dépôt: **12.02.1991**

(54) **Macromonomères multiséquencés fonctionnalisés et leur procédé de fabrication**

Funktionalisierte Multiblockmakromonomere und Verfahren zur Herstellung

Multi-block functionalized macromonomers and their method of manufacture

(84) Etats contractants désignés:
**AT BE CH DE DK ES FR GB GR IT LI LU NL SE**

(30) Priorité: **14.02.1990 FR 9001724**

(43) Date de publication de la demande:
**21.08.1991 Bulletin 1991/34**

(73) Titulaire: **ELF ATOCHEM S.A.**
**F-92800 Puteaux (FR)**

(72) Inventeurs:
- **Gaillard, Patrice**
  **F-64000 Pau (FR)**
- **Barbier, Yves**
  **F-60700 Pont Point (FR)**
- **Varshney, Sunil K.**
  **F-4030 Grivegnée (BE)**
- **Teyssie, Philippe**
  **B-4121 Neuville en Condroz (BE)**
- **Jacobs, Christian**
  **B-4342 Hognoul (BE)**
- **Fayt, Roger**
  **B-4121 Neupre (BE)**

(74) Mandataire: **Chaillot, Geneviève**
**Cabinet CHAILLOT,**
**B.P. No. 74**
**92703 Colombes Cédex (FR)**

(56) Documents cités:
**US-A- 3 842 146**
**US-A- 4 722 976**
**US-A- 4 845 156**

- **DATABASE WPIL, N 88-336121, Derwent Publications Ltd, London, GB & Research Disclosure 294077**
- **DATABASE WPIL, N 89-27856, Derwent Publications Ltd, London, GB & JP-A-63 301 281**
- **DATABASE WPIL, N 85-227892, Derwent Publications Ltd, London, GB**
- **CHEMICAL ABSTRACTS, vol. 97, no. 12, septembre 1982 Columbus, Ohio, USA ref. no. 93047M & CA-A-1 123 537**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention se rapporte à des macromonomères multiséquencés fonctionnalisés, comportant au moins une séquence (méth)acrylique, et à un procédé pour leur fabrication.

On connaît déjà des copolymères triséquencés associant des blocs de méthacrylates d'alkyle de natures différentes. Ainsi, Polymer Preprints 29(1), pages 343-345, décrit des copolymères triséquencés (méthacrylate de terbutyle-b-méthacrylate de 2-éthylhexyle-b-méthacrylate de terbutyle) obtenus par polymérisation anionique dans le tétrahydrofuranne à -78°C en présence d'un initiateur difonctionnel. Par cette méthode, on obtient des copolymères séquencés pouvant comporter jusqu'à 20% en poids de méthacrylate de terbutyle mais possédant une distribution relativement large des poids moléculaires. D'autre part, l'association de différents méthacrylates dans un copolymère triséquencé de ce type ne paraît pas de nature, même après hydrolyse et/ou neutralisation subséquente des fonctions esters, à conférer à ce copolymère des propriétés le rendant apte à une application particulière. Par contre, l'association, dans un copolymère triséquencé, de blocs acrylates et de blocs méthacrylates ou bien vinylaromatiques paraît susceptible, sous réserve d'une distribution étroite des poids moléculaires du copolymère, de procurer des propriétés intéressantes dans plusieurs types d'applications.

Par ailleurs, il est connu qu'un polymère vivant obtenu par voie anionique peut réagir avec un agent de terminaison tel qu'un composé halogéné et que, pour éviter des réactions secondaires indésirables, cette réaction de terminaison peut être précédée par une réaction avec un oxyde ou sulfure d'alkylène inférieur. Lorsque l'agent de terminaison contient lui-même une insaturation alpha-bêta éthylénique ou un autre groupe polymérisable, le polymère résultant est connu sous le nom de macromonomère. Des exemples de tels macromonomères ont été décrits notamment dans les brevets US-A-3 786 116, US-A-3 842 059, EP-A-104 046 et US-A-4 567 239. Des macromonomères de polyméthacrylates d'alkyle dotés d'une fonction styrène ou ester méthacrylique à une extrémité de chaîne ont été décrits par P. Lutz et al., Poly. Bull. 12, 79 (1984). S.D. Smith, dans Polymer Preprints Vol 29, n°2, 1988, LN° 3776, pages 48 et 49, décrit des macromonomères de méthacrylate de méthyle dotés à une extrémité de chaîne d'une fonction vinylique (par suite de l'utilisation, comme agent de terminaison, du chlorure de vinyl-4 benzoyle), ou encore d'un anion $O^-$ (par suite de l'utilisation, comme agent de terminaison, de benzaldéhyde), avec possibilité de faire réagir ensuite cet anion avec des réactifs comme le chlorure de méthacryloyle et le chlorométhylstyrène, ou bien d'obtenir des macromonomères à fonctionnalité hydroxyle. Enfin, la demande de brevet JP-A-62/232 408 décrit la préparation de macromonomères d'acrylate de butyle présentant un groupe terminal carboxylique par polymérisation en présence d'acide mercapto-3 propionique. En faisant réagir le groupe carboxylique terminal avec du méthacrylate de glycidyle, on obtient un macromonomère d'acrylate de butyle à groupe terminal méthacryloyloxy, dont l'indice de polydispersité est d'environ 1,8. Si l'on utilise un mercapto-2 éthanol à la première étape, on obtient un polymère à groupe terminal hydroxyle.

Un problème que la présente invention vise à résoudre consiste à mettre au point un procédé permettant d'allier les perspectives intéressantes de polymères multiséquencés comportant des séquences acryliques avec les possibilités de réactivité des macromonomères, c'est-à-dire un procédé de préparation de macromonomères multiséquencés fonctionnalisés.

La présente invention a donc d'abord pour objet un macromonomère multiséquencé fonctionnalisé de formule :

$$(A)_m - (B)_n - (C)_p - F \qquad (I)$$

ou bien de formule :

$$F - (A)_m - (B)_n - (C)_p - F \qquad (II)$$

dans lesquelles :

- chacun des blocs A, B et C représente une séquence d'un monomère choisi parmi les classes des monomères acryliques, vinylaromatiques, méthacryliques,
  diéniques, vinylpyridines, vinylpyrrolidones, oxydes d'alkylène, lactames, lactones et maléimides, avec les conditions que l'un au moins des blocs A et C soit choisi dans une classe différente de celle du bloc B, et que l'un au moins des blocs A, B ou C soit une séquence (méth)acrylique,
- m, n et p sont des nombres entiers représentant le nombre de motifs monomères dans la séquence considérée, tels que $3 \leq n \leq 1000$, $0 \leq m \leq 1000$ et $0 \leq p \leq 1000$, avec la condition que m et p ne sont pas simultanément égaux à 0, et
- F est un groupement terminé par $O^-$, OH, une insaturation $\alpha,\beta$-éthylénique ou une fonction oxiranne.

De préférence, le macromonomère multiséquencé fonctionnalisé selon l'invention est tel que le polymère multiséquencé

$$(A)_m-(B)_n-(C)_p$$

ait un poids moléculaire moyen en nombre allant de 5000 à 300 000 environ et/ou une polydispersité des poids moléculaires allant de 1,05 à 2,0.

Par monomère acrylique au sens de la présente invention, on entend un monomère choisi parmi les acrylates d'alkyle primaire, secondaire ou tertiaire dont le groupe alkyle, le cas échéant substitué par exemple par au moins un atome d'halogène, tel que le chlore ou fluor, et/ou au moins un groupe hydroxyle, contient de 1 à 18 atomes de carbone, en mentionnant plus particulièrement, l'acrylate d'éthyle, l'acrylate de propyle, l'acrylate d'isopropyle, l'acrylate de butyle, l'acrylate d'isobutyle, l'acrylate d'hexyle, l'acrylate de tertiobutyle, l'acrylate d'éthyl-2 hexyle, l'acrylate de nonyle, l'acrylate de lauryle, l'acrylate de stéaryle, l'acrylate de cyclohexyle, l'acrylate d'isodécyle, ainsi que l'acrylate de phényle, l'acrylate d'isobornyle, les acrylates d'alkylthioalkyle ou d'alcoxyalkyle, l'acrylonitrile et les dialkylacrylamides.

Par monomère méthacrylique au sens de la présente invention, on entend un monomère choisi parmi les méthacrylates d'alkyle dont le radical alkyle, le cas échéant substitué, par exemple par au moins un atome d'halogène comme le chlore ou le fluor et/ou au moins un groupe hydroxyle, contient 1 à 18 atomes de carbone, comme les méthacrylates de méthyle, d'éthyle, de 2,2,2-trifluoroéthyle, de n-propyle, d'isopropyle, de n-butyle, de sec.-butyle, de tert.-butyle, de n-amyle, d'i-amyle, d'hexyle, d'éthyl-2 hexyle, de cyclohexyle, d'octyle, d'i-octyle, de décyle, de β-hydroxy-éthyle, d'hydroxypropyle, d'hydroxybutyle, ainsi que le méthacrylate de glycidyle, le méthacrylate de norbornyle, le méthacrylonitrile et les dialkylméthacrylamides.

Par monomère vinylaromatique au sens de la présente invention, on entend un monomère aromatique à insaturation éthylénique tel que le styrène, le vinyltoluène, l'alphaméthylstyrène, le méthyl-4 styrène, le méthyl-3 styrène, le méthoxy-4 styrène, l'hydroxyméthyl-2 styrène, l'éthyl-4 styrène, l'éthoxy-4 styrène, le diméthyl-3,4 styrène, le chloro-2 styrène, le chloro-3 styrène, le chloro-4 méthyl-3 styrène, le tert. butyl-3 styrène, le dichloro-2,4 styrène, le dichloro-2,6 styrène et le vinyl-1 naphtalène.

Par monomère diénique, on entend un diène choisi parmi les diènes linéaires ou cycliques, conjugués ou non-conjugués comme par exemple le butadiène, l'isoprène, le 1,3-pentadiène, le 1,4-pentadiène, le 1-4-hexadiène, le 1,5-hexadiène, le 1,9-décadiène, le 5-méthylène-2-norbornène, le 5-vinyl-2-norbornène, les 2-alkyl-2,5-norbornadiènes, le 5-éthylène-2-norbornène, le 5-(2-propényl)-2-norbornène, norbornène, le 5-(5-hexényl)-2-norbornène, le 1,5-cyclooctadiène, le bicyclo [2,2,2] octa-2,5-diène, le cyclopentadiène, le 4,7,8,9-tétrahydroindène et l'isopropylidène tétrahydroindène.

Par oxydes d'alkylène, on entend notamment les oxydes d'éthylène et de propylène. Par lactames et lactones, on entend notamment le caprolactame et la caprolactone. Par maléimide, on entend plus particulièrement les maléimides N-substituées de formule :

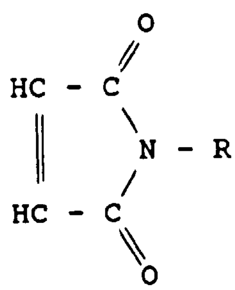

dans laquelle R est un radical alkyle, arylalkyle, aryle ou alkylaryle ayant de 1 à 12 atomes de carbone. Des exemples de telles molécules sont notamment la N-éthylmaléimide, la N-isopropylmaléimide, la N-n-butylmaléimide, la N-isobutylmaléimide, la N-terbutylmaléimide, la N-n-octylmaléimide, la N-cyclohexylmaléimide, la N-benzylmaléimide et la N-phénylmaléimide.

Ainsi, les macromonomères selon l'invention peuvent être biséquencés lorsque l'un des nombres entiers m et p est égal à 0. Parmi de tels macromonomère biséquencés on trouve notamment les familles suivantes :

- vinylaromatique-b-acrylique,
- vinylaromatique-b-méthacrylique,
- acrylique-b-méthacrylique,
- diénique-b-acrylique,
- diénique-b-méthacrylique,
- vinylpyridine-b-acrylique,
- vinylpyridine-b-méthacrylique,
- acrylique-b-maléimide,
- méthacrylique-b-maléimide, et

- méthacrylate de tertio-butyle-b-oxyde d'alkylène.

Les macromonomères selon l'invention peuvent également être triséquencés lorsqu'aucun des nombres entiers m et p n'est égal à 0. Parmi de tels macromonomères triséquencés on trouve notamment les familles :

- méthacrylique-b-acrylique-b-méthacrylique,
- acrylique-b-vinylaromatique-b-acrylique,
- méthacrylique-b-vinylaromatique-b-méthacrylique,
- (méth)acrylique-b-diénique-(méth)acrylique,
- vinylaromatique-b-acrylique-b-méthacrylique,
- diénique-b-acrylique-b-méthacrylique,
- vinylaromatique-b-méthacrylique-b-acrylique,
- maléimide-b-(méth)acrylique-b-maléimide, et
- acrylique-b-méthacrylique-b-acrylique.

Lorsque les blocs A et C sont de nature identique, ils peuvent être constitués du même nombre d'unités récurrentes du monomère considéré particulièrement lorsqu'ils sont préparés par le procédé ci-après désigné comme le «second procédé». Dans ce dernier cas, le bloc central B peut couramment représenter de 10 à 99% environ en poids du macromonomère.

Selon une variante de la présente invention, les blocs représentant une séquence d'un monomère acrylique et/ou méthacrylique, tel que précédemment défini, peuvent être hydrolysés en une séquence de l'acide acrylique et/ou méthacrylique correspondant et ladite séquence peut le cas échéant être ultérieurement saponifiée en une séquence de l'acrylate et/ou du méthacrylate alcalin correspondant. Selon une autre variante de la présente invention, les blocs représentant une séquence d'un monomère acrylique et/ou méthacrylique, tel que précédemment défini, peuvent être transestérifiés en une séquence d'un autre monomère acrylique et/ou méthacrylique, par exemple de façon à remplacer un acrylate tertiaire ou secondaire par un acrylate primaire.

Les macromonomères multiséquencés de formule (I) peuvent être obtenus par un premier procédé, caractérisé en ce que :

(1) on conduit une polymérisation anionique d'au moins un monomère A, à l'aide d'un système initiateur constitué par au moins un amorceur monofonctionnel et au moins un ligand choisi parmi les sels de métaux alcalins ou alcalino-terreux et les complexants macrocycliques non azotés, ce qui permet d'obtenir un chaînon vivant de la séquence polymère $(A)_m^-$ ; puis

(2) on fait réagir ledit chaînon vivant ainsi obtenu avec au moins un monomère B, en présence d'au moins un ligand tel que défini ci-dessus, ce qui permet d'obtenir un copolymère biséquencé vivant

$$(A)_m-(B)_n^-,$$

puis, le cas échéant

(3) on fait réagir ledit copolymère biséquencé vivant ainsi obtenu avec au moins un monomère C, en présence d'au moins un ligand tel que défini ci-dessus, ce qui permet d'obtenir un copolymère triséquencé vivant

$$(A)_m-(B)_n-(C)_p^-,$$

puis

(4) on fait réagir le polymère séquencé vivant obtenu à l'étape (2) ou à l'étape (3) avec un agent de fonctionnalisation pour obtenir un macromonomère multiséquence présentant une terminaison vinylique ou $O^-$ ou une fonction oxiranne,

(5) le cas échéant, dans le cas où le macromonomère multiséquence obtenu à l'étape (4) présente une terminaison $O^-$, il est mis à réagir avec un second agent de fonctionnalisation pour obtenir un macromonomère multiséquencé présentant une terminaison hydroxyle ou vinylique, et

(6) le cas échéant, dans le cas où le macromonomère multiséquence obtenu à l'étape (5) présente une terminaison vinylique, il est soumis à une transestérification de ses fonctions acryliques ou bien une hydrolyse suivie le cas échéant d'une saponification.

L'amorceur monofonctionnel utilisé dans la première étape du procédé peut être choisi notamment parmi les composés de formule :

$$(R)_p\text{-}M$$

dans laquelle :

- M désigne un métal alcalin ou alcalino-terreux (valence p de 1 ou 2) ; et
- R désigne un radical alkyle à chaîne droite ou ramifiée contenant 2 à 6 atomes de carbone, ou un radical aryle, éventuellement substitué, ou un radical alkyle contenant 1 à 6 atomes de carbone substitué par au moins un groupe phényle ;

et les composés de formule :

$$(C_6H_5)_2CHM'$$

dans laquelle M' est choisi parmi le lithium, le sodium et le potassium.

De tels amorceurs monofonctionnels sont, par exemple, le sec.-butyllithium, le n-butyllithium, le fluorényllithium, l'alphaméthylstyryllithium, le 1,1-diphénylhexyllithium (DPHLi), le diphénylméthyl-lithium ou -sodium ou -potassium et le 1,1-diphényl-3-méthylpentyllithium.

Le ligand peut être choisi parmi, d'une part, les sels minéraux de métaux alcalins ou alcalino-terreux par exemple, les chlorures, fluorures, bromures, iodures, borures, sulfates, nitrates et borates, et, d'autre part, les sels organiques de métaux alcalins, par exemple, les alcoolates, les esters d'acide carboxylique substitué en position alpha par ledit métal et les composés dans lesquels ledit métal alcalin est associé à un groupe tel que:

(A) les groupes de formule :

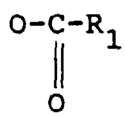 (III)

dans laquelle $R_1$ est un radical alkyle linéaire ou ramifié possédant de 1 à 20 atomes de carbone, ou bien un radical cycloalkyle possédant de 3 à 20 atomes de carbone, ou encore un radical aryle possédant de 6 à 14 atomes de carbone,

(B) les groupes de formule :

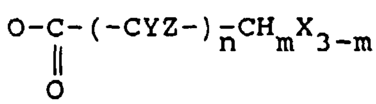 (IV)

dans laquelle :

- Y et Z, identiques ou différents l'un de l'autre, sont choisis parmi l'atome d'hydrogène et les atomes d'halogène ;
- n est un nombre entier allant de 0 à 4,
- X est un atome d'halogène, et
- m est un nombre entier allant de 0 à 2,

(C) les groupes de formule :

$$O\text{-}SO_2\text{-}CT_3 \quad (V)$$

dans laquelle T est choisi parmi l'atome d'hydrogène et les atomes d'halogène, et

(D) les groupes de formule :

$$B(R_2)_4 \quad (VI)$$

dans laquelle $R_2$ est choisi parmi l'atome d'hydrogène et les radicaux alkyle et aryle.

Des exemples de groupes de formule (III) sont les groupes acétate, propionate et benzoate. Des exemples de groupes de formule (IV) sont les groupes $\alpha$-bromoacétate et trifluoroacétate. Des exemples de groupes de formule (V) sont les groupes trifluorométhane sulfonique et méthanesulfonique. Des exemples de groupes (VI) sont les groupes borohydrure et tétraphénylborure.

Le ligand peut être également constitué par un agent complexant macrocyclique non azoté, choisi notamment

parmi les polyéthers cycliques (encore dénommés éthers-couronne) et les polythioéthers cycliques, tels que notamment des polyéthers macrocycliques dont l'anneau macrocyclique contient au moins 14 atomes de carbone et d'oxygène, chaque atome d'oxygène de l'anneau étant séparé des autres atomes d'oxygène de l'anneau par deux ou bien trois atomes de carbone : de tels polyéthers macrocycliques ont déjà été décrits dans les brevets US-A-3 687 978 et US-A-4 826 941, dont le contenu est ici incorporé par référence.

Dans la première étape du procédé selon l'invention, la proportion de ligand utilisé peut varier fortement par rapport à l'amorceur. Cette quantité peut être, par exemple, largement excédentaire par rapport à la quantité molaire d'agent amorceur. Cette quantité peut aussi être égale ou inférieure à la quantité molaire d'agent amorceur. De préférence, le ligand est introduit dans une proportion molaire vis-à-vis de l'amorceur au moins égale à 0,3 et allant jusqu'à 50 environ. Dans les étapes (1) à (3) du procédé selon l'invention, la polymérisation s'effectue en l'absence d'humidité et d'oxygène, et en présence d'au moins un solvant choisi, de préférence, parmi les solvants aromatiques, tels que le benzène et le toluène, ou bien le tétrahydrofuranne, le diglyme, le tétraglyme, l'orthoterphényle, le biphényle, la décaline, la tétraline, ou le diméthylformamide.

Quant à la température de polymérisation, elle peut varier entre environ -78°C et 20°C, et peut même atteindre 60°C lorsque le ligand est un alcoolate alcalin.

On conduit l'étape (4) du procédé selon l'invention de préférence dans le même milieu réactionnel que les étapes (1) à (3), à une température comprise entre environ -78°C et +20°C fonction de la nature du carbanion à fonctionnaliser, avec un rapport molaire de l'agent de fonctionnalisation à l'amorceur généralement compris entre environ 1 et 10 et pendant une durée généralement comprise entre 10 minutes et 3 heures environ. A cette étape (4), on peut utiliser, comme agent de fonctionnalisation, un monohalogénure vinylique tel que le bromure de vinyle, le bromure d'allyle, le chlorure d'allyle, le chlorure de vinyle, les halogénures de p-vinylbenzyle, le chlorure de méthacryloyle, le chlorure de 4-vinylbenzoyle, et les chlorosilanes, par exemple, le méthacrylate de chlorodiméthylsilylpropyle, le 4-(chlorodiméthylsilyl)styrène, styrène, le 4-(dichlorométhylsilyl)styrène, le 4-(chlorodiméthylsilyl)alphaméthylstyrène, le 4-(trichlorosilyl) styrène, le 4-(trichlorosilyl)alphaméthylstyrène et le 4-(chlorodiméthylsilyl)alphaméthylstyrène.

Pour obtenir un macromonomère multiséquencé terminé par une fonction oxiranne, on utilise de préférence comme agent de fonctionnalisation à l'étape (4) un composé tel que l'épichlorhydrine.

On peut également utiliser comme agent de fonctionnalisation un aldéhyde de formule :

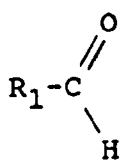 ,

dans laquelle $R_1$ représente un groupe hydrocarboné, de préférence aromatique, substitué ou non, ce qui conduit à un macromonomère de formule :

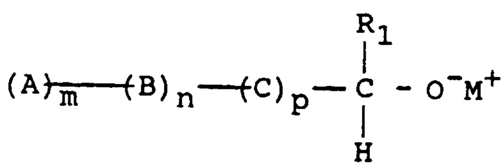

M représentant le métal de l'amorceur, les terminaisons OM étant, à l'étape (5), transformées en terminaisons OH par désactivation par un agent protonique, tel que l'eau ou un alcool, ou bien, par réaction avec un halogénure HalF', F' comportant une fonction vinylique terminale, en terminaisons O-F'.

Comme aldéhydes, on peut citer le benzaldéhyde et l'anthracénylaldéhyde, et comme halogénure HalF', on peut citer tous les chlorures d'acides, par exemple le chlorure de méthacryloyle ou le chlorure d'acryloyle.

Le macromonomère obtenu à l'issue de l'étape (4) ou de l'étape (5) peut être séparé du milieu par précipitation dans un solvant ou mélange de solvants tel que le méthanol, un mélange de méthanol et d'eau, l'heptane, Le macromonomère séparé peut ensuite être purifié par une technique telle que celle décrite dans le brevet US-A-4 636 540.

Les macromonomères multiséquencés selon l'invention peuvent, au cours de l'étape (6), être hydrolysés à une température allant de 70° à 170°C environ, sous une pression allant de 1 à 15 bars et en présence de 0,5 à 10% environ en poids, par rapport au macromonomère, d'un catalyseur acide tel que l'acide paratoluène sulfonique, l'acide méthane toluène sulfonique ou l'acide chlorhydrique, dans un solvant tel que le dioxanne, le toluène, le tétrahydrofuranne, le diglyme, la diméthylisobutylcétone ou un mélange de solvants permettant d'opérer en phase homogène. Après hydrolyse, les macromonomères peuvent être précipités dans l'heptane, filtrés, lavés pour éliminer toute trace de catalyseur et finalement séchés. Ils peuvent aussi être ultérieurement neutralisés au moyen de potasse méthanolique ou encore d'hydroxyde de tétraméthylammonium en solution dans un mélange de toluène et de méthanol afin

de former les macro-ionomères ou macromonomères polyélectrolytes correspondants.

Lorsque les macromonomères selon l'invention comportent une séquence dérivée d'un acrylate d'alkyle tertiaire ou secondaire, cette séquence peut également être transestérifiée de manière connue en une séquence d'un acrylate d'alkyle primaire.

Les macromonomères multiséquencés de formule (II) peuvent être obtenus par un second procédé, caractérisé en ce que

(1) on effectue la polymérisation anionique d'au moins un monomère B à l'aide d'un système initiateur constitué d'au moins un amorceur bifonctionnel et au moins un ligand choisi parmi les sels de métaux alcalin ou alcalino-terreux et les complexants macrocycliques non azotés, ce qui permet d'obtenir un polymère vivant $(B)_n^-$, puis
(2) on fait réagir ledit polymère vivant avec au moins un monomère A, en présence d'au moins un ligand tel que défini ci-dessus, ce qui permet d'obtenir un copolymère triséquencé vivant

$$^{-}(A)_m-(B)_n-(A)_p^{-},$$

puis
(3) on fait réagir ledit copolymère triséquence vivant avec au moins un agent de fonctionnalisation pour obtenir un macromonomère triséquencé présentant deux terminaisons vinyliques ou $O^-$ ou une fonction oxiranne,
(4) le cas échéant, dans le cas où le macromonomère triséquencé obtenu à l'étape (3) présente une terminaison $O^-$, il est mis à réagir avec un second agent de fonctionnaliation pour obtenir un macromonomère triséquencé présentant au moins une terminaison hydroxyle ou vinylique, et
(5) le cas échéant, dans le cas où le macromonomère triséquencé obtenu à l'étape (4) présente une terminaison vinylique, il est soumis à une transestérification de ses fonctions acryliques ou bien à une hydrolyse suivie le cas échéant d'une saponification.

L'amorceur bifonctionnel utilisé dans la première étape du procédé peut être choisi notamment parmi des composés tels que le 1,4-dilithio-1,1,4,4-tétraphénylbutane, le 1,4-disodio-1,1,4,4-tétraphénylbutane, le naphtalène sodium, le naphtalène lithium, et naphtalène potassium et leurs homologues. La nature et la proportion du ligand, les conditions de polymérisation des étapes (1) et (2), la nature et la proportion de l'agent de fonctionnalisation et les conditions réactionnelles utilisées dans l'étape (3) sont les mêmes que celles décrites au sujet de l'étape (4) du premier procédé ci-dessus. Lorsqu'un aldéhyde est utilisé comme agent de fonctionnalisation, on obtient un macromonomère triséquencé de formule :

$$^{+}M^{-}O-\underset{\displaystyle H}{\overset{\displaystyle R_1}{C}}-(A)_m-(B)_n-(A)_p-\underset{\displaystyle H}{\overset{\displaystyle R_1}{C}}-O^{-}M^{+}$$

M représentant le métal de l'amorceur, les terminaisons OM étant, à l'étape (4), transformées en terminaisons OH par désactivation par un agent protonique, tel que l'eau ou un alcool, ou bien, par réaction avec un halogénure HalF′, F′ comportant une fonction vinylique terminale, en terminaisons O-F′.

L'hydrolyse, la neutralisation et la transestérification des macromonomères triséquencés au cours de l'étape (5) sont effectuées dans les mêmes conditions que celles décrites précédemment au sujet de l'étape (6) du premier procédé.

Le taux de fonctionnalisation au cours de l'étape (4) du premier procédé ou (3) de second procédé dépend fortement de la pureté de l'agent de fonctionnalisation du temps de la réaction et de la température. Il est déterminé par une méthode de résonance magnétique nucléaire du proton.

Les exemples suivants illustrent la présente invention.

EXEMPLE 1

Dans un réacteur de volume 4 litres préalablement séché et sous atmosphère d'azote, on introduit 7,5 g de chlorure de lithium préalablement séché. On y ajoute 2000 $cm^3$ de tétrahydrofuranne purifié et conservé à l'abri de la lumière et, sous agitation, $17{,}7.10^{-3}$ mole de sec-butyllithium. On porte le mélange à la température de -60°C, puis on ajoute 133g de méthacrylate de méthyle, puis après 30 minutes 44 g d'acrylate de tertiobutyle. On laisse réagir pendant 15 minutes. Les solvants et monomères sont purifiés par les techniques habituelles de la polymérisation anionique ; en particulier, l'acrylate et le méthacrylate sont traités successivement par l'hydrure de calcium et le triéthylaluminium.

On obtient ainsi avec un rendement de 100% un copolymère biséquencé possédant les caractéristiques suivantes :

| | |
|---|---|
| Mn (méthacrylate) | = 9 000 |
| Mn (acrylate) | = 4 000 |
| Mw/Mn (copolymère total) | = 1,3 |

On fait ensuite réagir le copolymère biséquencé vivant obtenu avec $5,3.10^{-2}$ mole de benzaldéhyde, pendant 1 heure à -50°C, puis avec $7,1.10^{-2}$ mole de chlorure de méthacryloyle. Le macromonomère obtenu est séparé du milieu par précipitation dans un mélange équipondéral d'eau et de méthanol. Le taux de fonctionnalisation du macromonomère biséquencé obtenu, déterminé par résonance magnétique nucléaire du proton, est égal à 75%.

EXEMPLE 2

On reproduit la procédure expérimentale de l'exemple 1 en modifiant les quantités des ingrédients comme suit et en introduisant la solution d'acrylate de tertiobutyle préalablement à celle de méthacrylate de méthyle.

| | |
|---|---|
| chlorure de lithium | 3,0 g |
| sec-butyllithium | $7,1.10^{-3}$ mole |
| acrylate de tertiobutyle | 142 g |
| méthacrylate de méthyle | 35 g |
| benzaldéhyde | $2,1.10^{-2}$ mole |
| chlorure de méthacryloyle | $2,8.10^{-2}$ mole |

Dans ces conditions, on obtient un macromonomère biséquencé possédant les caractéristiques suivantes :

| | |
|---|---|
| Mn (acrylate) | = 34 000 |
| Mn (méthacrylate) | = 8 000 |
| Mw/Mn (copolymère total) | = 1,35 |
| taux de fonctionnalisation | = 55% |

EXEMPLE 3

En utilisant les techniques expérimentales de l'exemple 1, en opérant en trois étapes (première étape : méthacrylate de méthyle pendant 30 minutes ; deuxième étape: acrylate de tertiobutyle pendant 15 minutes ; troisième étape : méthacrylate de méthyle pendant 30 minutes) et en modifiant les quantités des ingrédients comme suit, on prépare un macromonomère triséquencé (méthacrylate de méthyle - b - acrylate de tertiobutyle - b - méthacrylate de méthyle).

| | |
|---|---|
| chlorure de lithium | 2,9 g |
| sec-butyllithium | $7.10^{-3}$ mole |
| méthacrylate de méthyle | 35 g |
| acrylate de tertiobutyle | 105 g |
| benzaldéhyde | $2,1.10^{-2}$ mole |
| chlorure de méthacryloyle | $2,8.10^{-2}$ mole |

Le macromonomère triséquencé obtenu dans ces conditions possède les caractéristiques suivantes :

| | |
|---|---|
| Mn (méthacrylate) | = 6 300 |
| Mn (acrylate) | = 21 000 |
| Mn (méthacrylate) | = 9 500 |
| Mw/Mn (copolymère total) | = 1,42 |
| taux de fonctionnalisation | = 65% |

EXEMPLE 4

On reproduit la procédure expérimentale de l'exemple 2 en remplaçant le sec-butyllithium par le naphtalène lithium et en modifiant les quantités des ingrédients comme suit, pour préparer un macromonomère triséquencé (méthacrylate de méthyle - b - acrylate de tertiobutyle - b méthacrylate de méthyle).

| | |
|---|---|
| chlorure de lithium | 7,4 g |
| naphtalène de lithium | $17,7.10^{-3}$ mole |
| méthacrylate de méthyle | 44 g |
| acrylate de tertiobutyle | 133 g |
| benzaldéhyde | $5,3.10^{-2}$ mole |
| chlorure de méthacryloyle | $7,1.10^{-2}$ mole |

Le macromonomère triséquencé obtenu possède les catactéristiques suivantes :

| | |
|---|---|
| Mn (acrylate) | = 22 300 |
| Mn (méthacrylate) | = 12 200 |
| Mw/Mn (copolymère total) | = 1,48 |
| taux de fonctionnalisation | = 60% |

EXEMPLE 5

Dans un réacteur de volume 250 ml préalablement séché et sous atmosphère d'azote, on introduit $2,5.10^{-3}$ mole de chlorure de lithium préalablement séché à 130°C sous vide. On y ajoute 20 ml de tétrahydrofuranne séché sur sodium et benzophénone et, sous agitation, $0,5.10^{-3}$ mole de sec-butyllithium. On porte le mélange à la température de -78°C au moyen d'un mélange d'acétone et de carboglace, puis on ajoute 1 g de styrène préalablement séché sur hydrure de calcium puis fluorényllithium puis, après 15 minutes, 1 g d'acrylate de tertiobutyle (séché sur hydrure de calcium puis triéthylaluminium) dilué dans 2 ml de tétrahydrofuranne (séché sur polystyryllithium). Après encore 15 minutes de polymérisation, on obtient avec un rendement de 100% un copolymère biséquencé possédant les caractéristiques suivantes :

| | |
|---|---|
| Mn (styrène) | = 2 100 |
| Mn (acrylate) | = 4 200 |
| Mw/Mn (copolymère total) | = 1,24 |

On fait ensuite réagir pendant 2 heures à -78°C le copolymère biséquencé vivant obtenu avec $10^{-3}$ mole de chlorure de 4-vinylbenzoyle préalablement purifié par distillation. Le taux de fonctionnalisation du macromonomère biséquencé obtenu, déterminé par résonance magnétique nucléaire du proton, au moyen d'un spectromètre BRUKER AN 400, est égal à 100%.

EXEMPLE 6

On reproduit la procédure expérimentale de l'exemple 5 en remplaçant le sec-butyllithium par le naphtalène lithium et en modifiant les quantités des ingrédients comme suit :

| | |
|---|---|
| chlorure de lithium | = $5.10^{-3}$ mole |
| tétrahydrofuranne | = 30 ml |
| naphtalène lithium | = $10^{-3}$ mole |
| styrène | = 1 g |
| acrylate de tertiobutyle | = 2 g (dans 4 ml de tétrahydrofuranne) |
| chlorure de 4-vinylbenzoyle | = $2.10^{-3}$ mole |

Le macromonomère triséquencé obtenu dans ces conditions possède les caractéristiques suivantes :

| | |
|---|---|
| Mn (styrène) | = 2 200 |
| Mn (acrylate) | = 6 800 |
| Mw/Mn (copolymère total) | = 1,3 |
| taux de fonctionnalisation | = 100% |

EXEMPLE 7

En utilisant les techniques expérimentales de l'exemple 5, en opérant en trois étapes (la dernière étape étant la polymérisation pendant 15 minutes d'1 g de méthacrylate de méthyle) et en modifiant la quantité de tétrahydrofuranne (30 ml), on obtient un macromonomère triséquencé (styrène - b - acrylate de tertiobutyle - b -méthacrylate de méthyle) possédant les caractéristiques suivantes :

| | |
|---|---|
| Mn (styrène) | = 2 100 |
| Mn (acrylate) | = 4 300 |
| Mn (méthacrylate) | = 6 500 |
| Mw/Mn (copolymère total) | = 1,3 |
| taux de fonctionnalisation | = 100% |

EXEMPLE 8

On fait réagir pendant 4 heures à -78°C le copolymère biséquencé styrène-b-acrylate de tertiobutyle obtenu à l'exemple 5 avec $10^{-3}$ mole de 4-(chlorodiméthylsilyl)alphaméthylstyrène. Le taux de fonctionnalisation du macromonomère biséquencé obtenu, déterminé comme à l'exemple 5, est égal à 67%.

EXEMPLE 9

On reproduit la procédure expérimentale de l'exemple 5 en remplaçant le styrène par le méthacrylate de méthyle en vue d'obtenir un copolymère biséquencé possédant les caractéristiques suivantes :

| | |
|---|---|
| Mn (méthacrylate) | = 2 500 |
| Mn (acrylate) | = 2 300 |
| Mw/Mn (copolymère total) | = 1,2 |

Ce copolymère est mis à réagir pendant 4 heures à -78°C avec $10^{-3}$ mole de 4-(chlorodiméthylsilyl)alphaméthylstyrène. Le taux de fonctionnalisation du macromonomère biséquencé obtenu, déterminé comme à l'exemple 5, est égal à 59%.

**Revendications**

**Revendications pour les Etats contractants suivants : AT, BE, CH, DE, DK, FR, GB, GR, IT, LI, LU, NL, SE**

**1.** Macromonomère multiséquencé fonctionnalisé de formule :

$$(A)_m - (B)_n - (C)_p - F \qquad (I)$$

ou bien de formule :

$$F - (A)_m - (B)_n - (C)_p - F \qquad (II)$$

dans lesquelles :

- chacun des blocs A, B et C représente une séquence d'un monomère choisi parmi les classes des monomères

acryliques, vinylaromatiques, méthacryliques,
diéniques, vinylpyridines, vinylpyrrolidones, oxydes d'alkylène, lactames, lactones et maléimides, avec les conditions que l'un au moins des blocs A et C soit choisi dans une classe différente de celle du bloc B, et que l'un au moins des blocs A, B ou C soit une séquence (méth)acrylique,

- m, n et p sont des nombres entiers représentant le nombre de motifs monomères dans la séquence considérée, tels que $3 \leq n \leq 1000$, $0 \leq m \leq 1000$ et $0 \leq p \leq 1000$, avec la condition que m et p ne sont pas simultanément égaux à 0, et
- F est un groupement terminé par $O^-$, par OH ou par une insaturation $\alpha,\beta$-éthylénique.

**2.** Macromonomère multiséquencé fonctionnalisé selon la revendication 1, caractérisé en ce que le polymère multiséquencé

$$(A)_m-(B)_n-(C)_p$$

a un poids moléculaire moyen en nombre allant de 5 000 à 300 000 et/ou une polydispersité des poids moléculaires allant de 1,05 à 2,0.

**3.** Procédé de fabrication d'un macromonomère multiséquencé fonctionnalisé de formule (I) selon la revendication 1, caractérisé en ce que :

(1) on conduit une polymérisation anionique d'au moins un monomère A, à l'aide d'un système initiateur constitué par au moins un amorceur monofonctionnel et au moins un ligand choisi parmi les sels de métaux alcalins ou alcalino-terreux et les complexants macrocycliques non azotés, ce qui permet d'obtenir un chaînon vivant de la séquence polymère $(A)_m^-$ ; puis
(2) on fait réagir ledit chaînon vivant ainsi obtenu avec au moins un monomère B, en présence d'au moins un ligand tel que défini ci-dessus, ce qui permet d'obtenir un copolymère biséquencé vivant

$$(A)_m-(B)_n-(C)_p^-,$$

puis le cas échéant
(3) on fait réagir ledit copolymère biséquencé vivant ainsi obtenu avec au moins un monomère C, en présence d'au moins un ligand tel que défini ci-dessus, ce qui permet d'obtenir un copolymère triséquencé vivant

$$(A)_m-(B)_n-(C)_p^-,$$

puis
(4) on fait réagir le polymère séquencé vivant obtenu à l'étape (2) ou à l'étape (3) avec un agent de fonctionnalisation pour obtenir un macromonomère multiséquence présentant une terminaison vinylique ou $O^-$ ou une fonction oxiranne.

**4.** Procédé de fabrication selon la revendication 3, caractérisé en ce que dans une étape (5), dans le cas où le macromonomère multiséquencé obtenu à l'étape (4) présente une terminaison $O^-$, il est mis à réagir avec un second agent de fonctionnalisation pour obtenir un macromonomère multiséquencé présentant une terminaison hydroxyle ou vinylique.

**5.** Procédé de fabrication selon la revendication 4, caractérisé en ce que dans une étape (6), dans le cas où le macromonomère multiséquencé obtenu à l'étape (5) présente une terminaison vinylique, il est soumis à une transestérification de ses fonctions acryliques ou bien à une hydrolyse suivie le cas échéant d'une saponification.

**6.** Procédé de fabrication d'un macromonomère multiséquencé fonctionnalisé de formule (II) selon la revendication 1, caractérisé en ce que :

(1) on effectue la polymérisation anionique d'au moins un monomère B à l'aide d'un système initiateur constitué d'au moins un amorceur bifonctionnel et au moins un ligand choisi parmi les sels de métaux alcalin ou alcalino-terreux et les complexants macrocycliques non azotés, ce qui permet d'obtenir un polymère vivant $(B)_n^-$, puis
(2) on fait réagir ledit polymère vivant avec au moins un monomère A, en présence d'au moins un ligand tel que défini ci-dessus, ce qui permet d'obtenir un copolymère triséquencé vivant

$$^-(A)_m-(B)_n-(A)_p^-,$$

puis
(3) on fait réagir ledit copolymère triséquence vivant avec au moins un agent de fonctionnalisation pour obtenir

un macromonomère triséquencé présentant deux terminaisons vinyliques ou $O^-$ ou une fonction oxiranne.

7. Procédé de fabrication selon la revendication 6, caractérisé en ce que dans une étape (4), dans le cas où le macromonomère triséquencé obtenu à l'étape (3) présente une terminaison $O^-$, il est mis à réagir avec un second agent de fonctionnalisation pour obtenir un macromonomère triséquencé présentant au moins une terminaison hydroxyle ou vinylique.

8. Procédé de fabrication selon la revendication 7, caractérisé en ce que dans une étape (5), dans le cas où le macromonomère triséquencé obtenu à l'étape (4) présente une terminaison vinylique, il est soumis à une transestérification de ses fonctions acryliques ou bien à une hydrolyse suivie le cas échéant d'une saponification.

9. Procédé de fabrication selon l'une des revendications 3 et 6, caractérisé en ce que l'agent de fonctionnalisation est choisi parmi les monohalogénures vinyliques et les aldéhydes de formule :

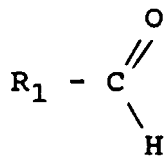

dans laquelle $R_1$ représente un groupe hydrocarboné aromatique.

10. Procédé de fabrication selon l'une des revendications 3 et 6, caractérisé en ce que l'agent de fonctionnalisation est un chlorosilane.

**Revendications pour l'Etat contractant suivant : ES**

1. Procédé de fabrication d'un macromonomère multiséquencé fonctionnalisé de formule :

$$(A)_m-(B)_n-(C)_p-F \qquad (I)$$

dans laquelle :

- chacun des blocs A, B et C représente une séquence d'un monomère choisi parmi les classes des monomères acryliques, vinylaromatiques, méthacryliques,
  diéniques, vinylpyridines, vinylpyrrolidones, oxydes d'alkylène, lactames, lactones et maléimides, avec les conditions que l'un au moins des blocs A et C soit choisi dans une classe différente de celle du bloc B, et que l'un au moins des blocs A, B ou C soit une séquence (méth)acrylique,
- m, n et p sont des nombres entiers représentant le nombre de motifs monomères dans la séquence considérée, tels que $3 \leq n \leq 1000$, $0 \leq m \leq 1000$ et $0 \leq p \leq 1000$, avec la condition que m et p ne sont pas simultanément égaux à 0, et
- F est un groupement terminé par $O^-$, par OH ou par une insaturation $\alpha,\beta$-éthylénique,

caractérisé en ce que :

(1) on conduit une polymérisation anionique d'au moins un monomère A, à l'aide d'un système initiateur constitué par au moins un amorceur monofonctionnel et au moins un ligand choisi parmi les sels de métaux alcalins ou alcalino-terreux et les complexants macrocycliques non azotés, ce qui permet d'obtenir un chaînon vivant de la séquence polymère $(A)_m^-$ ; puis
(2) on fait réagir ledit chaînon vivant ainsi obtenu avec au moins un monomère B, en présence d'au moins un ligand tel que défini ci-dessus, ce qui permet d'obtenir un copolymère biséquencé vivant

$$(A)_m-(B)_n^-,$$

puis le cas échéant
(3) on fait réagir ledit copolymère biséquencé vivant ainsi obtenu avec au moins un monomère C, en présence d'au moins un ligand tel que défini ci-dessus, ce qui permet d'obtenir un copolymère triséquencé vivant

$$(A)_m-(B)_n-(C)_p^-,$$

puis

(4) on fait réagir le polymère séquencé vivant obtenu à l'étape (2) ou à l'étape (3) avec un agent de fonctionnalisation pour obtenir un macromonomère multiséquence présentant une terminaison vinylique ou O⁻ ou une fonction oxiranne.

**2.** Procédé selon la revendication 1, caractérisé en ce que, dans une étape (5), dans le cas où le macromonomère multiséquencé obtenu à l'étape (4) présente une terminaison O⁻, il est mis à réagir avec un second agent de fonctionnalisation pour obtenir un macromonomère multiséquencé présentant une terminaison hydroxyle ou vinylique.

**3.** Procédé selon la revendication 2, caractérisé en ce que dans une étape (6), dans le cas où le macromonomère multiséquencé obtenu à l'étape (5) présente une terminaison vinylique, il est soumis à une transestérification de ses fonctions acryliques ou bien à une hydrolyse suivie le cas échéant d'une saponification.

**4.** Procédé de fabrication d'un macromonomère multiséquencé fonctionnalisé de formule :

$$F-(A)_m-(B)_n-(C)_p-F \qquad (II)$$

dans laquelle les blocs A, B et C, m, n et p et F sont tels que définis à la revendication 1, caractérisé en ce que :

(1) on effectue la polymérisation anionique d'au moins un monomère B à l'aide d'un système initiateur constitué d'au moins un amorceur bifonctionnel et au moins un ligand choisi parmi les sels de métaux alcalin ou alcalino-terreux et les complexants macrocycliques non azotés, ce qui permet d'obtenir un polymère vivant $(B)_n^-$, puis

(2) on fait réagir ledit polymère vivant avec au moins un monomère A, en présence d'au moins un ligand tel que défini ci-dessus, ce qui permet d'obtenir un copolymère triséquencé vivant

$$^-(A)_m-(B)_n-(A)_p^-,$$

puis

(3) on fait réagir ledit copolymère triséquence vivant avec au moins un agent de fonctionnalisation pour obtenir un macromonomère triséquencé présentant deux terminaisons vinyliques ou O⁻ ou une fonction oxiranne.

**5.** Procédé selon la revendication 4, caractérisé en ce que, dans une étape (4), dans le cas où le macromonomère triséquencé obtenu à l'étape (3) présente une terminaison O⁻, il est mis à réagir avec un second agent de fonctionnalisation pour obtenir un macromonomère triséquencé présentant au moins une terminaison hydroxyle ou vinylique.

**6.** Procédé selon la revendication 5, caractérisé en ce que, dans une étape (5), dans le cas où le macromonomère triséquencé obtenu à l'étape (4) présente une terminaison vinylique, il est soumis à une transestérification de ses fonctions acryliques ou bien à une hydrolyse suivie le cas échéant d'une saponification.

**7.** Procédé selon l'une des revendications 1 et 4, caractérisé en ce que l'agent de fonctionnalisation est choisi parmi les monohalogénures vinyliques et les aldéhydes de formule :

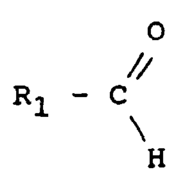

dans laquelle $R_1$ représente un groupe hydrocarboné aromatique.

**8.** Procédé selon l'une des revendications 1 et 4, caractérisé en ce que l'agent de fonctionnalisation est un chlorosilane.

**9.** Procédé selon l'une des revendications 1 à 8, caractérisé en ce qu'il conduit à un polymère multiséquencé

$$(A)_m-(B)_n-(C)_p$$

ayant un poids moléculaire moyen en nombre allant de 5 000 à 300 000 et/ou une polydispersité des poids moléculaires allant de 1,05 à 2,0.

**Patentansprüche**

**Patentansprüche für folgende Vertragsstaaten : AT, BE, CH, DE, DK, FR, GB, GR, IT, LI, LU, NL, SE**

1. Funktionalisiertes Multiblockmakromonomeres der Formel

$$(A)_m-(B)_n-(C)_p-F \qquad (I)$$

oder auch der Formel

$$F-(A)_m-(B)_n-(C)_p-F \qquad (II)$$

in denen:

- jeder der Blöcke A, B und C einen Block eines Monomeren darstellt, der ausgewählt ist aus den Klassen von Acrylmonomeren, vinylaromatischen Monomeren, Methacrylmonomeren, Dienmonomeren, Vinylpyridinmonomeren, Vinylpyrrolidonmonomeren, Alkylenoxidmonomeren, Lactammonomeren, Lactonmonomeren und Maleinimidmonomeren, mit den Maßgaben, daß mindestens einer der Blöcke A und C aus einer von der Klasse des Blocks B verschiedenen Klasse ausgewählt ist und daß mindestens einer der Blöcke A, B und C ein (Meth-)Acrylblock ist,
- m, n und p ganze Zahlen sind, die die Zahl der Monomereinheiten in dem betrachteten Block darstellen mit $3 \leq n \leq 1000$, $0 \leq m \leq 1000$ und $0 \leq p \leq 1000$, mit der Maßgabe, daß m und p nicht gleichzeitig gleich 0 sind, und
- F eine Gruppierung ist mit endständigem $O^-$, endständigem OH oder endständiger $\alpha,\beta$-ethylenisch ungesättigter Bindung.

2. Funktionalisiertes Multiblockmakromonomeres nach Anspruch 1, dadurch gekennzeichnet, daß das Multiblockpolymer $(A)_m-(B)_n-(C)_p$ ein zahlenmittleres Molekulargewicht von 5.000 bis 300.000 und /oder eine Polydispersität der Molekulargewichte von 1,05 bis 2,0 aufweist.

3. Verfahren zur Herstellung eines funktionalisierten Multiblockmakromonomeren der Formel (I) gemäß Anspruch 1, dadurch gekennzeichnet, daß

(1) man eine anionische Polymerisation mindestens eines Monomeren A durchführt mit Hilfe eines Startersystems, das aus mindestens einem monofunktionellen Starter und mindestens einem Liganden besteht, der ausgewählt ist aus Alkalimetallsalzen oder Erdalkalimetallsalzen und nicht stickstoffhaltigen makrocyclischen Komplexbildnern, was die Herstellung einer lebenden Kette des Polymerblocks $(A)_m^-$ ermöglicht, dann
(2) man die so erhaltene lebende Kette mit mindestens einem Monomeren B in Gegenwart mindestens eines wie oben definierten Liganden reagieren läßt, was die Herstellung eines lebenden Zweiblockcopolymeren

$$(A)_m-(B)_n^-$$

ermöglicht, dann gegebenenfalls
(3) man das so erhaltene lebende Zweiblockcopolymer mit mindestens einem Monomeren C in Gegenwart mindestens eines wie oben definierten Liganden reagieren läßt, was die Herstellung eines lebenden Dreiblockcopolymeren

$$(A)_m-(B)_n-(C)_p^-$$

ermöglicht, dann
(4) man das in Schritt (2) oder in Schritt (3) erhaltene lebende Blockpolymere mit einem Funktionalisierungsreagens reagieren läßt, um ein Multiblockmakromonomeres mit endständiger Vinylgruppe, endständigem $O^-$

oder endständiger Oxiranfunktion zu erhalten.

**4.** Verfahren zur Herstellung nach Anspruch 3, dadurch gekennzeichnet, daß in einem Schritt (5), für den Fall, daß das in Schritt (4) erhaltene Multiblockmakromonomere ein endständiges $O^-$ aufweist, dieses Makromonomere zur Reaktion gebracht wird mit einem zweiten Funktionalisierungsreagens, um ein Multiblockmakromonomeres zu erhalten, das eine endständige Hydroxyl- oder Vinylgruppe aufweist.

**5.** Verfahren zur Herstellung nach Anspruch 4, dadurch gekennzeichnet, daß in einem Schritt (6), für den Fall, daß das in Schritt (5) erhaltene Multiblockmakromonomere eine endständige Vinylgruppe aufweist, dieses Makromonomere einer Umesterung seiner Acrylfunktionen oder auch einer Hydrolyse, der gegebenenfalls eine Verseifung folgt, unterworfen wird.

**6.** Verfahren zur Herstellung eines funktionalisierten Multiblockmakromonomeren der Formel (II) gemäß Anspruch 1, dadurch gekennzeichnet, daß

(1) man die anionische Polymerisation mindestens eines Monomeren B mit Hilfe eines Startersystems durchführt, das aus mindestens einem bifunktionellen Starter und mindestens einem Liganden besteht, der ausgewählt ist aus Alkalimetallsalzen oder Erdalkalimetallsalzen und nicht stickstoffhaltigen makrocyclischen Komplexbildnern, was die Herstellung eines lebenden Polymers $(B)_n^-$ erlaubt,
(2) man dieses lebende Polymer mit mindestens einem Monomeren A reagieren läßt, in Gegenwart mindestens eines wie oben definierten Liganden, was die Herstellung eines lebenden Dreiblockcopolymers

$$^{-}(A)_m-(B)_n-(A)_p^{-}$$

ermöglicht, dann
(3) man dieses lebende Dreiblockcopolymer mit mindestens einem Funktionalisierungsreagens reagieren läßt, um ein Dreiblockmakromonomer zu erhalten, das an den Enden Vinylfunktionen, $O^-$ oder eine Oxiranfunktion aufweist.

**7.** Verfahren zur Herstellung nach Anspruch 6, dadurch gekennzeichnet, daß in einem Schritt (4), für den Fall, daß das in Schritt (3) erhaltene Dreiblockmakromonomere endständiges $O^-$ aufweist, dieses Makromonomere mit einem zweiten Funktionalisierungsreagens zur Reaktion gebracht wird, um ein Dreiblockmakromonomeres mit mindestens einer endständigen Hydroxyl- oder Vinylgruppierung zu erhalten.

**8.** Verfahren zur Herstellung nach Anspruch 7, dadurch gekennzeichnet, daß in einem Schritt (5), für den Fall, daß das in Schritt (4) erhaltene Dreiblockmakromonomere eine Vinylendgruppe aufweist, dieses Makromonomere einer Umesterung seiner Acrylfunktion oder auch einer Hydrolyse, der gegebenenfalls eine Verseifung folgt, unterworfen wird.

**9.** Verfahren zur Herstellung nach einem der Ansprüche 3 und 6, dadurch gekennzeichnet, daß das Funktionalisierungsreagens ausgewählt ist, aus Vinylmonohalogeniden und Aldehyden der Formel

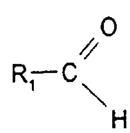

wobei $R_1$ eine aromatische Kohlenwasserstoffgruppe darstellt.

**10.** Verfahren zur Herstellung nach einem der Ansprüche 3 und 6, dadurch gekennzeichnet, daß das Funktionalisierungsreagens Chlorsilan ist.

**Patentansprüche für folgenden Vertragsstaat : ES**

**1.** Verfahren zur Herstellung eines funktionalisierten Multiblockmakromonomers der Formel:

$$(A)_m-(B)_n-(C)_p-F \qquad (I)$$

in der

- jeder der Blöcke A, B und C einen Block eines Monomeren darstellt, der ausgewählt ist aus den Klassen von Acrylmonomeren, vinylaromatischen Monomeren, Methacrylmonomeren, Dienmonomeren, Vinylpyridinmonomeren, Vinylpyrrolidonmonomeren, Alkylenoxidmonomeren, Lactammonomeren, Lactonmonomeren und Maleinimidmonomeren, mit den Maßgaben, daß mindestens einer der Blöcke A und C aus einer von der Klasse des Blocks B verschiedenen Klasse ausgewählt ist und daß mindestens einer der Blöcke A, B und C ein (Meth-)Acrylblock ist,
- m, n und p ganze Zahlen sind, die die Zahl der Monomereinheiten in dem betrachteten Block darstellen mit $3 \leq n \leq 1000$, $0 \leq m \leq 1000$ und $0 \leq p \leq 1000$, mit der Maßgabe, daß m und p nicht gleichzeitig gleich 0 sind, und
- F eine Gruppierung ist mit endständigem $O^-$, endständigem OH oder endständiger $\alpha,\beta$-ethylenisch ungesättigter Bindung,

dadurch gekennzeichnet, daß

(1) man eine anionische Polymerisation mindestens eines Monomeren A durchführt mit Hilfe eines Startersystems, das aus mindestens einem monofunktionellen Starter und mindestens einem Liganden besteht, der ausgewählt ist aus Alkalimetallsalzen oder Erdalkalimetallsalzen und nicht stickstoffhaltigen makrocyclischen Komplexbildnern, was die Herstellung einer lebenden Kette des Polymerblocks $(A)_m^-$ m ermöglicht, dann
(2) man die so erhaltene lebende Kette mit mindestens einem Monomeren B in Gegenwart mindestens eines wie oben definierten Liganden reagieren läßt, was die Herstellung eines lebenden Zweiblockcopolymeren

$$(A)_m-(B)_n^-$$

ermöglicht, dann gegebenenfalls
(3) man das so erhaltene lebende Zweiblockcopolymer mit mindestens einem Monomeren C in Gegenwart mindestens eines wie oben definierten Liganden reagieren läßt, was die Herstellung eines lebenden Dreiblockcopolymeres

$$(A)_m-(B)_n-(C)_p^-$$

ermöglicht, dann
(4) man das in Schritt (2) oder in Schritt (3) erhaltene lebende Blockpolymere mit einem Funktionalisierungsreagens reagieren läßt, um ein Multiblockmakromonomeres zu erhalten mit endständiger Vinylgruppe, endständigem $O^-$ oder endständiger Oxiranfunktion.

2. Verfahren nach Anspruch 1, dadurch gekennzeichnet, daß in einem Schritt (5), für den Fall, daß das in Schritt (4) erhaltene Multiblockmakromonomere ein endständiges $O^-$ aufweist, dieses Makromonomere zur Reaktion gebracht wird mit einem zweiten Funktionalisierungsreagens, um ein Multiblockmakromonomeres zu erhalten, das eine endständige Hydroxyl- oder Vinylgruppe aufweist.

3. Verfahren nach Anspruch 2, dadurch gekennzeichnet, daß in einem Schritt (6), für den Fall, daß das in Schritt (5) erhaltene Multiblockmakromonomere eine endständige Vinylgruppe aufweist, dieses Makromonomere einer Umesterung seiner Acrylfunktionen oder auch einer Hydrolyse, der gegebenenfalls eine Verseifung folgt, unterworfen wird.

4. Verfahren zur Herstellung eines funktionalisierten Multiblockmakromonomeren der Formel

$$F-(A)_m-(B)_n-(C)_p-F \qquad (II)$$

in der die Blöcke A, B und C, m, n und p und F die gleiche Bedeutung wie in Anspruch 1 haben, dadurch gekennzeichnet, daß

(1) man die anionische Polymerisation mindestens eines Monomeren B mit Hilfe eines Startersystems durchführt, das aus mindestens einem bifunktionellen Starter und mindestens einem Liganden besteht, der ausgewählt ist aus Alkalimetallsalzen oder Erdalkalimetallsalzen und nicht stickstoffhaltigen makrocyclischen Komplexbildnern, was die Herstellung eines lebenden Polymers $^-(B)_n^-$ erlaubt,
(2) man dieses lebende Polymer mit mindestens einem Monomeren A in Gegenwart mindestens eines wie oben definierten Liganden reagieren läßt, was die Herstellung eines lebenden Dreiblockcopolymers

$$^{-}(A)_m-(B)_n-(A)_p^{-}$$

ermöglicht, dann

(3) man dieses lebende Dreiblockcopolymer mit mindestens einem Funktionalisierungsreagens reagieren läßt, um ein Dreiblockmakromonomer zu erhalten, das an den Enden Vinylfunktionen, $O^-$ oder eine Oxiranfunktion aufweist.

**5.** Verfahren nach Anspruch 4, dadurch gekennzeichnet, daß in einem Schritt (4), für den Fall, daß das in Schritt (3) erhaltene Dreiblockmakromonomere endständiges $O^-$ aufweist, dieses Makromonomere mit einem zweiten Funktionalisierungsreagens zur Reaktion gebracht wird, um ein Dreiblockmakromonomeres mit mindestens einer endständigen Hydroxyl- oder Vinylgruppierung zu erhalten .

**6.** Verfahren nach Anspruch 5, dadurch gekennzeichnet, daß in einem Schritt (5), für den Fall, daß das in Schritt (4) erhaltene Dreiblockmakromonomere eine Vinylendgruppe aufweist, dieses Makromonomere einer Umesterung seiner Acrylfunktionen oder auch einer Hydrolyse, der gegebenenfalls eine Verseifung folgt, unterworfen wird.

**7.** Verfahren nach einem der Ansprüche 1 und 4, dadurch gekennzeichnet, daß das Funktionalisierungsreagens ausgewählt ist, aus Vinylmonohalogeniden und Aldehyden der Formel

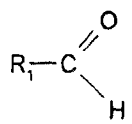

wobei $R_1$ eine aromatische Kohlenwasserstoffgruppe darstellt.

**8.** Verfahren nach einem der Ansprüche 1 und 4, dadurch gekennzeichnet, daß das Funktionalisierungsreagens Chlorsilan ist.

**9.** Verfahren nach einem der Ansprüche 1 bis 8, dadurch gekennzeichnet, daß das Multiblockpolymer $(A)_m-(B)_n-(C)_p$ ein zahlenmittleres Molekulargewicht von 5.000 bis 300.000 und/oder eine Polydispersität der Molekulargewichte von 1,05 bis 2,0 aufweist.

**Claims**

**Claims for the following Contracting States : AT, BE, CH, DE, DK, FR, GB, GR, IT, LI, LU, NL, SE**

**1.** Functionalized multiblock macromonomer of formula:

$$(A)_m-(B)_n-(C)_p-F \qquad (I)$$

or of formula:

$$F-(A)_m-(B)_n-(C)_p-F \qquad (II)$$

in which formulae:

- each of the blocks A, B and C represents a sequence of a monomer chosen from the acrylic, vinylaromatic, methacrylic, diene, vinylpyridine, vinylpyrrolidone, alkylene oxide, lactam, lactone and maleimide monomer classes, on condition that at least one of the blocks A and C is chosen from a different class to that of block B and that at least one of the blocks A, B or C is a (meth)acrylic sequence,
- m, n and p are integers representing the number of monomer units in the sequence under consideration, such that $3 \le n \le 1000$, $0 \le m \le 1000$ and $0 \le p \le 1000$, on condition that m and p are not 0 at the same time, and
- F is a group terminated by $O^-$, by OH or by an $\alpha,\beta$-ethylenic unsaturation.

**2.** Functionalized multiblock macromonomer according to claim 1, characterized in that the multiblock polymer

$$(A)_m - (B)_n - (C)_p$$

has a number-average molecular weight ranging from 5000 to 300,000 and/or a polydispersity of the molecular weights ranging from 1.05 to 2.0.

**3.** Process for the production of a functionalized multiblock macromonomer of formula (I) according to claim 1, characterized in that:

(1) an anionic polymerization of at least one monomer A is carried out with the aid of an initiator system consisting of at least one monofunctional initiator and at least one ligand chosen from alkali metal salts or alkaline earth metal salts and macrocyclic complexing agents which do not contain nitrogen, which makes it possible to obtain a live chain of the polymer sequence $(A)_m^-$; then
(2) the said live chain thus obtained is reacted with at least one monomer B, in the presence of at least one ligand as defined above, which makes it possible to obtain a live diblock copolymer

$$(A)_m - (B)_n^-,$$

then, if necessary,
(3) the said live diblock copolymer thus obtained is reacted with at least one monomer C, in the presence of at least one ligand as defined above, which makes it possible to obtain a live triblock copolymer

$$(A)_m - (B)_n - (C)_p^-,$$

then
(4) the live block polymer obtained in step (2) or in step (3) is reacted with a functionalizing agent in order to obtain a multiblock macromonomer having a terminal vinyl or $O^-$ or an oxirane group.

**4.** Production process according to claim 2, characterized in that, in a step (5), in the case where the multiblock macromonomer obtained in step (4) has a terminal $O^-$, it is reacted with a second functionalizing agent in order to obtain a multiblock macromonomer having a terminal hydroxyl or vinyl.

**5.** Production process according to claim 4, characterized in that, in a step (6), in the case where the multiblock macromonomer obtained in step (5) has a terminal vinyl, it is subjected to a transesterification of its acrylic groups or to a hydrolysis followed, if necessary, by a saponification.

**6.** Process for the production of a functionalized multiblock macromonomer of formula (II) according to claim 1, characterized in that:

(1) the anionic polymerization of at least one monomer B is carried out with the aid of an initiator system consisting of at least one difunctional initiator and at least one ligand chosen from alkali metal or alkaline earth metal salts and macrocyclic complexing agents which do not contain nitrogen, which makes it possible to obtain a live polymer $^-(B)_n^-$, then
(2) the said live polymer is reacted with at least one monomer A, in the presence of at least one ligand as defined above, which makes it possible to obtain a live triblock copolymer

$$^-(A)_m - (B)_n - (A)_p^-,$$

then
(3) the said live triblock copolymer is reacted with at least one functionalizing agent in order to obtain a triblock macromonomer having two terminal vinyl or $O^-$ or an oxirane group.

**7.** Production process according to claim 6, characterized in that, in a step (4), in the case where the triblock macromonomer obtained in step (3) has a terminal $O^-$, it is reacted with a second functionalizing agent in order to obtain a triblock macromonomer having at least one terminal hydroxyl or vinyl.

**8.** Production process according to claim 7, characterized in that, in a step (5), in the case where the triblock macromonomer obtained in step (4) has a terminal vinyl, it is subjected to a transesterification of its acrylic groups or to a hydrolysis followed, if necessary, by a saponification.

**9.** Production process according to one of claims 3 and 6, characterized in that the functionalizing agent is chosen from vinyl monohalides and aldehydes of formula:

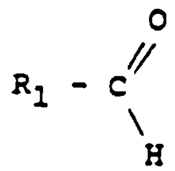

in which $R_1$ represents an aromatic hydrocarbon group.

**10.** Production process according to one of claims 3 and 6, characterized in that the functionalizing agent is a chlorosilane.

**Claims for the following Contracting State : ES**

**1.** Process for the production of a functionalized multiblock macromonomer of formula :

$$(A)_m-(B)_n-(C)_p-F \qquad (I)$$

in which formula :

- each of the blocks A, B and C represents a sequence of a monomer chosen from the acrylic, vinylaromatic, methacrylic, diene, vinylpyridine, vinylpyrrolidone, alkylene oxide, lactam, lactone and maleimide monomer classes, on condition that at least one of the blocks A and C is chosen from a different class to that of block B and that at least one of the blocks A, B or C is a (meth)acrylic sequence,
- m, n and p are integers representing the number of monomer units in the sequence under consideration, such that $3 \leq n \leq 1000$, $0 \leq m \leq 1000$ and $0 \leq p \leq 1000$, on condition that m and p are not 0 at the same time, and
- F is a group terminated by $O^-$, by OH or by an $\alpha,\beta$-ethylenic unsaturation

characterized in that :

(1) an anionic polymerization of at least one monomer A is carried out with the aid of an initiator system consisting of at least one monofunctional initiator and at least one ligand chosen from alkali metal salts or alkaline earth metal salts and macrocyclic complexing agents which do not contain nitrogen, which makes it possible to obtain a live chain of the polymer sequence $(A)_m^-$ ; then
(2) the said live chain thus obtained is reacted with at least one monomer B, in the presence of at least one ligand as defined above, which makes it possible to obtain a live diblock copolymer

$$(A)_m-(B)_n^-,$$

then, if necessary,
(3) the said live diblock copolymer thus obtained is reacted with at least one monomer C, in the presence of at least one ligand as defined above, which makes it possible to obtain a live triblock copolymer

$$(A)_m-(B)_n-(C)_p^-,$$

then
(4) the live block polymer obtained in step (2) or in step (3) is reacted with a functionalizing agent in order to obtain a multiblock macromonomer having a terminal vinyl or $O^-$ or an oxirane group.

**2.** Process according to claim 1, characterized in that, in a step (5), in the case where the multiblock macromonomer obtained in step (4) has a terminal $O^-$, it is reacted with a second functionalizing agent in order to obtain a multiblock macromonomer having a terminal hydroxyl or vinyl.

**3.** Process according to claim 2, characterized in that, in a step (6), in the case where the multiblock macromonomer obtained in step (5) has a terminal vinyl, it is subjected to a transesterification of its acrylic groups or to a hydrolysis followed, if necessary, by a saponification.

**4.** Process for the production of a functionalized multiblock macromonomer of formula :

$$F-(A)_m-(B)_n-(C)_p-F \qquad (II)$$

in which formula the blocks A, B and C, m, n and p and F are as defined in claim 1, characterized in that :

(1) the anionic polymerization of at least one monomer B is carried out with the aid of an initiator system consisting of at least one difunctional initiator and at least one ligand chosen from alkali metal or alkaline earth metal salts and macrocyclic complexing agents which do not contain nitrogen, which makes it possible to obtain a live polymer $^{-}(B)_n^{-}$, then
(2) the said live polymer is reacted with at least one monomer A, in the presence of at least one ligand as defined above, which makes it possible to obtain a live triblock copolymer

$$^{-}(A)_m-(B)_n-(A)_p^{-} ,$$

then
(3) the said live triblock copolymer is reacted with at least one functionalizing agent in order to obtain a triblock macromonomer having two terminal vinyl or $O^-$ or an oxirane group.

**5.** Process according to claim 4, characterized in that, in a step (4), in the case where the triblock macromonomer obtained in step (3) has a terminal $O^-$, it is reacted with a second functionalizing agent in order to obtain a triblock macromonomer having at least one terminal hydroxyl or vinyl.

**6.** Process according to claim 5, characterized in that, in a step (5), in the case where the triblock macromonomer obtained in step (4) has a terminal vinyl, it is subjected to a transesterification of its acrylic groups or to a hydrolysis followed, if necessary, by a saponification.

**7.** Process according to one of claims 1 and 4, characterized in that the functionalizing agent is chosen from vinyl monohalides and aldehydes of formula :

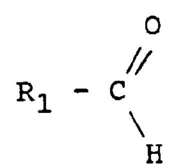

in which $R_1$ represents an aromatic hydrocarbon group.

**8.** Process according to one of claims 1 and 4, characterized in that the functionalizing agent is a chlorosilane.

**9.** Process according to one of claim 1 to 8, characterized in that it results in a multiblock polymer

$$(A)_m-(B)_n-(C)_p$$

having a number-average molecular weight ranging from 5000 to 300,000 and/or a polydispersity of the molecular weights ranging from 1.05 to 2.0.